# EUROPEAN PATENT SPECIFICATION

(11) **EP 1 788 224 B1**
(45) Date of publication and mention of the grant of the patent: **29.10.2008**
(21) Application number: 05110938.7
(22) Date of filing: 18.11.2005
(51) Int. Cl.: F02D 13/02

(54) **An internal combustion engine comprising a variable valve lift system and a variable valve timing system, and a method for such an engine**
Brennkraftmaschine mit variablem Ventilhub sowie Ventilsteuerung und Verfahren für eine solche Brennkraftmaschine
Moteur à combustion interne ayant und dispositif de variation de levée et du timing des soupapes et mèthode pour un tel moteur

(43) Date of publication of application: 23.05.2007
(73) Proprietor: Ford Global Technologies, LLC, Dearborn, MI 48126 (US)
(72) Inventor: Lyngfelt, Thomas, 414 62, Göteborg (SE); Litorell, Martin, 414 59, Göteborg (SE)
(74) Representative: Holmberg, Magnus

(56) References cited:
- EP-A- 1 350 936
- EP-A- 1 363 002
- US-A- 5 031 583
- US-A- 5 881 690
- US-B1- 6 230 675

## Description

### TECHNICAL FIELD

The present invention relates to an internal combustion engine comprising a variable valve lift system whereby the engine can operate selectively in either of at least two valve lift modes, the engine further comprising a variable valve timing (VVT) system comprising a VVT actuator. The present invention relates to a method for controlling valve timing in such an engine.

### BACKGROUND

An internal combustion engine can be provided with a variable valve lift system, for example a cam profile shift (CPS) system, and a variable valve timing (VVT) system. Such an engine is described in for example US6581564B2. In engines where one oil feed system is provided for actuation in both the CPS system and the VVT system, the physical connection between the VVT system and the CPS system via the oil system can cause the following problem: A mode shift in the CPS system might cause a pressure pulse, which can affect the WT-position. The VVT angle can due to this effect have a control error of up to 10 CA (crankshaft angles).

Also in engines in which the CPS system and the VVT system have separate systems for their respective actuation, whether hydraulic or not, a mode shift in the CPS system might affect the VVT-position. The cause could be a friction change due to the different camlobes used in the CPS modes. Further, where both systems are electrically actuated, a CPS mode shift can cause a voltage dip affecting the VVT position.

Such a sudden control error of the VVT system is highly undesirable, since the related change in the VVT position can cause a sudden change of the volumetric efficiency of the engine, which in turn can cause a step in the output torque of the engine, possibly followed by a decaying oscillation. This can cause discomfort to persons in a vehicle in which the engine is operating. In particular, the VVT position is critical at a CPS mode shift, in order to minimise output torque steps, as described in the European Patent Application No. 05110939.5, filed by the applicant on the same day as this application, and published as EP 1 788 202.

### SUMMARY OF THE INVENTION

It is an object of the invention to minimise torque steps when shifting modes in a variable valve lift system of an internal combustion engine.

The object is reached with a method of the type mentioned initially, comprising providing, in connection to a valve lift mode shift, a control pulse for the VVT actuator.

Thereby, an effect on the VVT position by a valve lift mode shift can be counteracted or compensated for, so that the VVT position remains essentially the same before, during and after the mode shift.

The VVT actuator could be controllable by at least one control valve of a hydraulic system, the control valve being controllable by an engine control unit, whereby the control pulse is sent to the control valve. In case the variable valve lift system comprises a valve lift shift actuator controllable by the same hydraulic system, a pressure pulse, positive or negative, caused by changing the valve lift mode and the physical connection by the hydraulic system between the VVT actuator and the valve lift shift actuator, can be counteracted by the provided control pulse, so that the VVT position is not affected.

However, it should be noted that the VVT actuator could be controlled by some other type of system. For example, the VVT actuator could use an electric power supply which is controlled by an engine control unit.

Preferably, the control pulse is sent after a time interval (Dt) following a signal for the valve lift mode shift. The signal for the valve lift mode shift could be a signal from which a valve lift mode shift can be predicted. For example, the signal could be in the form of an internal command in an engine control unit. Also, the control pulse could be terminated by a decrement function.

Further advantages of the invention will be described closer below.

The object of the invention is also reached with an internal combustion engine according to any of the claims 5-8.

### DESCRIPTION OF THE FIGURES

Below, the invention will be described in detail with reference to the drawing, in which
- fig. 1 is a schematic view of parts of an internal combustion engine, comprising a variable valve timing system and a variable valve lift system, the latter in a low lift position,
- fig. 2 is a detail of the view in fig. 1, where the cam profiles have been shifted to a high lift position, and
- fig. 3 and 4 are diagrams of engine control signals as functions of time.

### DETAILED DESCRIPTION

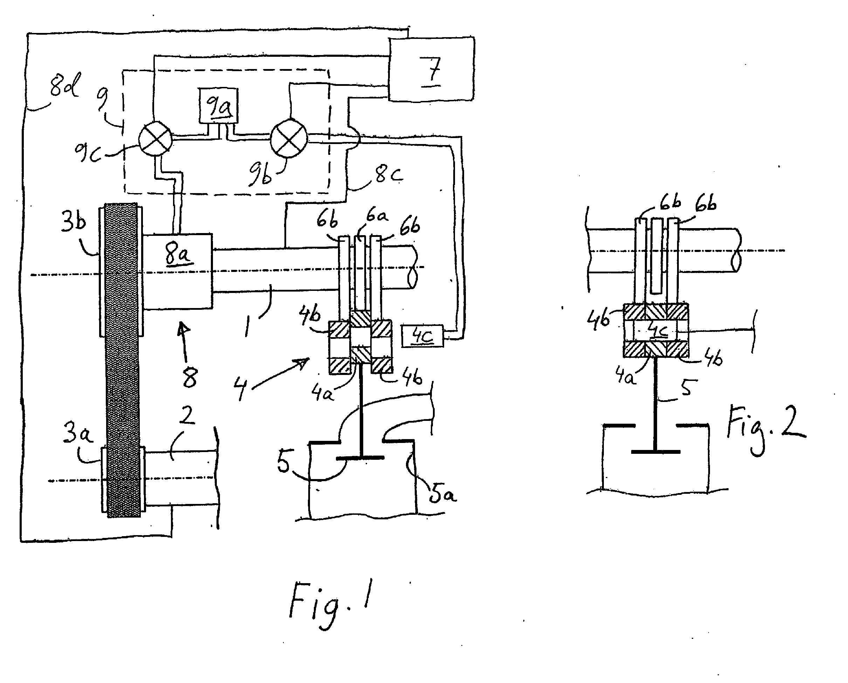

Fig. 1 shows schematically parts of an internal combustion engine. A camshaft 1 is driven by a crankshaft 2 via a belt (or chain) 3, a crankshaft wheel 3a, and a camshaft wheel 3b in a manner known in the art. The engine comprises a variable valve lift in the form of a cam profile shifting (CPS) system 4, adapted to shift the lift profile of intake and/or exhaust valves of the engine, by changing the valve lift provided by camlobes 6a, 6b on the camshaft 1. In fig. 1 only one valve, in the form of an intake valve 5 at a cylinder 5a is shown. In this example, for each valve 5 there is provided one low lift camlobe 6a and two high lift camlobes 6b.

In operation each of the camlobes 6a, 6b acts on valve actuators 4a, 4b, in the form of valve tappets, located between the camlobes and the valve. As depicted in the schematic presentation of fig.1 and 2, the valve actuators can be fixed to each other by a valve lift shift actuator 4c, here also referred to as a CPS actuator 4c, in turn controllable by a hydraulic system 9, indicated in fig. 1 with broken lines. The hydraulic system 9 can be, as is known in the art, used for manoeuvring a plurality of units of the engine, and comprises a hydraulic pump 9a. For control of the CPS actuator(s) 4c, the CPS system 4 comprises a CPS actuator control valve 9b in the hydraulic system 9. The CPS actuator control valve 9b is controllable by an engine control unit (ECU) 7. The CPS actuator control valve 9b can be of a known type, for example a solenoid valve, not further described here. The ECU 7 has, as known, computational capabilities and storage capabilities, and can be formed by one device, or more than one physically separate, but logically connected devices.

In a low lift mode, shown in fig. 1, the valve actuators 4a, 4b are not fixed to each other by the CPS actuator 4c, which results in the valve lift being controlled by the low lift camlobe 6a. As can be seen in fig. 2, in a high lift mode the valve actuators 4a, 4b are fixed to each other by the CPS actuator 4c, so that the valve motion is controlled by the high lift camlobes 6b.

Alternatively, still within the scope of the present invention, the CPS system can be provided in a variety of manners known in the art, for example as described in US5950583A. In particular, the CPS actuator can be provided in alternative manners, and the CPS system can be adapted to assume more than two valve lift modes.

The engine also comprises a variable valve timing (VVT) system 8, which is adapted to adjust the VVT position, i.e. set the camshaft 1 at desired angular positions in relation to the camshaft wheel 3b. The VVT system comprises a VVT actuator 8a, for example of the type described in US6135077A, at the camshaft wheel 3b. The VVT actuator 8a is adapted to mechanically change the VVT position, and is controllable by the hydraulic system 9. For control of the VVT actuator 8a, the VVT system comprises a VVT actuator control valve 9c in the hydraulic system 9, which could be of the same type as the CPS actuator control valve 9b. The VVT actuator control valve 9c is also controllable by the ECU 7. Also, by means of a connection 8c to a cam phase detector and a connection 8d to a crankshaft position detector, the ECU can determine a current value of the VVT position.

The VVT actuator 8a with the VVT actuator control valve 9c is integrating which means that a constant value of the signal from the ECU 7 to the VVT actuator control valve 9c gives a constant flow of oil through the valve if the pressure drop over the valve is constant. Since the CPS system and the VTT system uses the same hydraulic system, a CPS mode shift can result in a change of the oil pressure at the VVT actuator control valve 9c. As described closer below, in order to compensate for this change of pressure, the VVT actuator control valve 9c is activated so as to counteract the effect of the pressure change.

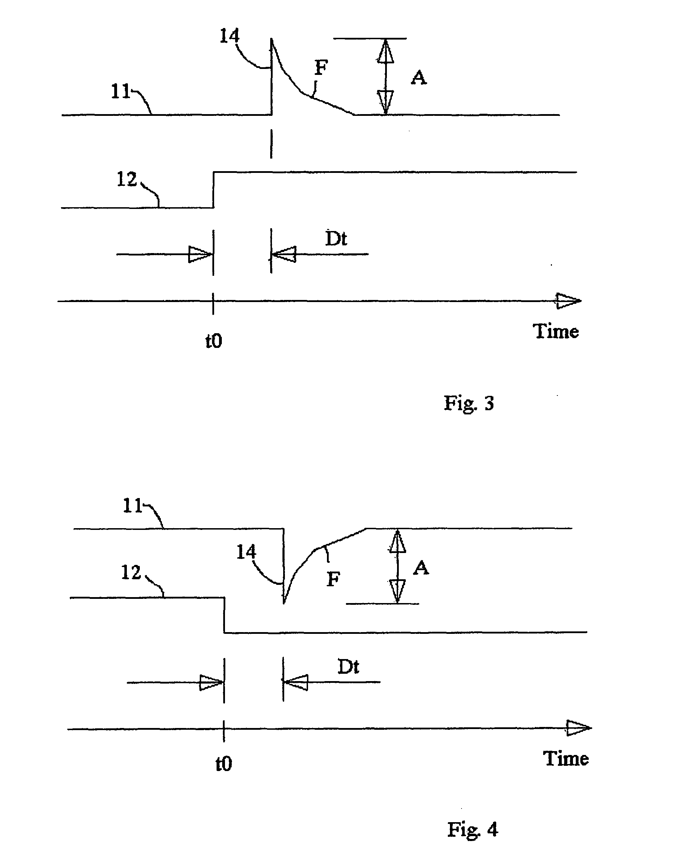

Here reference is made also to fig. 3, which shows signals of the ECU 7 in the form of a VVT actuator control valve signal 11, and a CPS actuator control valve signal 12. In connection to a valve lift mode shift, here also referred to as a cam profile mode shift, the ECU 7 sends a control pulse 14 for the VVT actuator in this example. In this embodiment, at the time t0, a signal is identified from which a valve lift mode shift is predicted. The mode shift involves changing the cam profile mode from the low lift mode to the high lift mode. The signal is in the form of an internal command in the ECU 7. At least partly based on the internal command, the ECU sends a signal to the CPS actuator control valve 9b. Also, according to this embodiment of the invention, at the end of a time interval Dt following the time t0 at which the signal or internal command was identified, the ECU 7 sends a control pulse 14 to the VVT actuator control valve 9c.

Alternatively, the ECU 7 could send the control pulse 14 to the VVT actuator control valve 9c at the end of a time interval following a time at which the ECU sends a signal to the CPS actuator control valve 9b.

The control pulse 14 in this example includes a step to its maximum amplitude A, and is terminated by a decrement function F. For this presentation, the control pulse 14 in fig. 3 is defined as positive. The control pulse 14 will result in a movement of the VVT actuator control valve 9c so as for the pressure at the VVT actuator to be constant despite the pressure change in the hydraulic system caused by the CPS mode shift. Thus, the control pulse 14 will counteract the effect of the cam profile shift on the VVT position.

Thus, the effect of the control pulse 14 is to counteract the influence of the cam profile mode shift on the VVT position. The time interval Dt, and the amplitude A and the decrement function F of the control pulse 14 could be predetermined. Alternatively, one or more of these parameters, Dt, A, F could be determined based on at least one engine operation related parameter, for example the engine speed and/or the oil temperature. Such determinations could be based on predetermined functions or tables mapping the time interval Dt, the pulse amplitude A and the pulse decrement function F to the engine operation related parameter(s). The time interval Dt, the pulse amplitude A, and the decrement function F, or the functions for their determination, could be calibratable, i.e., they could be adjusted before operation so that an optimal effect of the control pulse 14 is achieved. More specifically, the shape of the control pulse should adapted to a shape of a pressure pulse in the hydraulic system caused by a CPS mode shift.

The time interval Dt is preferably chosen so that the VVT actuator 8a response to the control pulse 14 occurs at the same time as the CPS mode shift affects the VVT position. The delay between the CPS mode shift control signal and the time at which the CPS mode shift affects the VVT position can be due to, for example, a pressure pulse travelling through a hydraulic system adapted to control the CPS system as well as the VVT system.

Here reference is made also to fig. 4. A cam profile shift is made in the opposite direction in relation to the shift described with reference to in fig. 3. Thus, at the time t0, the ECU sends a signal to the CPS actuator control valve 9b in order to change the cam profile mode from the high lift mode to the low lift mode. After a time interval Dt, the ECU 7 sends a control pulse 14 to the VVT actuator control valve 9c. The control pulse 14 in fig. 4 is negative instead of positive. Therefore, the pressure pulse sent to the WT actuator 8a, will result in the WT actuator 8a acting in the opposite direction in relation to the actuator action following the control pulse in fig. 3. However, for certain CPS systems, not described closer here, it can be suitable to provide control pulses to the VVT system having the same sign (positive or negative) for both types of CPS mode shifts, i.e. low lift to high lift and vice versa.

Alternatives are possible to the embodiment described above. For example, the control pulse can have alternative shapes, for example it can be in the form of a constant amplitude pulse. Also, the control pulse can be sent simultaneously as the ECU signal 12 for the cam profile shift.

The invention is equally applicable to engines where the VVT system and the CPS system are actuated by two separate hydraulic systems, or where any or both of the systems are actuated by some other type of system, for example including electromagnetic actuators. Further, the invention is equally applicable to engines with variable valve lift systems providing more than two valve lift modes. It should also be noted that the method according to the invention is equally applicable to engines with spark ignition and engines with compression ignition.

## Claims

1. A method for controlling valve timing in an internal combustion engine comprising a variable valve lift system (4) whereby the engine can operate selectively in either of at least two valve lift modes, the engine further comprising a variable valve timing (VVT) system (8) comprising a VVT actuator (8a), **characterized in that** it comprises providing, in connection to a valve lift mode shift, a control pulse (14) for the VVT actuator (8a).

2. A method according to claim 1, wherein the VVT actuator (8a) is controllable by at least one control valve (9c) of a hydraulic system (9), the control valve (9c) being controllable by an engine control unit (7), whereby the control pulse (14) is sent to the control valve.

3. A method according to claim 1 or 2, wherein the control pulse (14) is sent after a time interval (Dt) following a signal for the valve lift mode shift.

4. A method according to any of the preceding claims, wherein the control pulse (14) is terminated by a decrement function (F).

5. An internal combustion engine comprising an engine control unit (7), a variable valve lift system (4) whereby the engine can operate selectively in either of at least two valve lift modes, and a variable valve timing (VVT) system (8) comprising a VVT actuator (8a), **characterized in that** the engine control unit is adapted to provide, in connection to a valve lift mode shift, a control pulse (14) for the VVT actuator (8a).

6. An engine according to claim 5, wherein the VVT actuator (8a) is controllable by at least one control valve (9c) of a hydraulic system (9), the control valve (9c) being controllable by the engine control unit (7), whereby the engine control unit (7) is adapted to send the control pulse (14) to the control valve.

7. An engine according to claim 5 or 6, wherein the control pulse (14) is sent after a time interval (Dt) following a signal for the valve lift mode shift.

8. An engine according to any of the claims 5-7, wherein the control pulse (14) is terminated by a decrement function (F).

## Patentansprüche

1. Verfahren zum Steuern einer Ventilstellzeit in einem, ein variables Ventilhebesystem (4) umfassenden Verbrennungsmotor, wodurch der Motor wahlweise in einer von zumindest zwei Ventilhebearten arbeiten kann, wobei der Motor weiter ein einen VVT-Betätiger (8a) umfassendes, variables Ventilstellzeit (VVT)- System (8) umfasst, **dadurch gekennzeichnet, dass** es umfasst, in Verbindung mit einem Ventilhebeartumschalten einen Steuerpuls (14) für den VVT-Betätiger (8a) bereitzustellen.

2. Verfahren gemäß Anspruch 1, bei dem der VVT-Betätiger (8a) durch zumindest ein Steuerventil (9c) eines Hydrauliksystems (9) steuerbar ist, wobei das Steuerventil (9c) durch eine Motorsteuereinheit (7) steuerbar ist, wodurch der Steuerpuls (14) zum Steuerventil gesandt wird.

3. Verfahren gemäß einem der Ansprüche 1 oder 2, bei dem der Steuerpuls (14) nach einem, einem Signal für das Ventilhebeartumschalten folgenden Zeitintervall (Dt) gesandt wird.

4. Verfahren gemäß einem der vorangegangenen Ansprüche, bei dem der Steuerpuls (14) durch eine Dekrementfunktion (F) beendet wird.

5. Verbrennungsmotor mit einer Motorsteuereinheit (7), einem variablen Ventilhebesystem (4), wodurch der Motor wahlweise in einer von zumindest zwei Ventilhebearten arbeiten kann, und einem einen VVT-Betätiger (8a) umfassenden, variablen Ventilstellzeit (VVT)- System (8), **dadurch gekennzeichnet, dass** die Motorsteuereinheit eingerichtet ist, in Verbindung mit einem Ventilhebeartumschalten einen Steuerpuls (14) für den VVT-Betätiger (8a) bereitzustellen.

6. Verbrennungsmotor gemäß Anspruch 5, bei dem der VVT-Betätiger (8a) durch zumindest ein Steuerventil (9c) eines Hydrauliksystems (9) steuerbar ist, wobei das Steuerventil (9c) durch eine Motorsteuereinheit (7) steuerbar ist, wodurch die Motorsteuereinheit (7) den Steuerpuls (14) zum Steuerventil senden kann.

7. Motor gemäß einem der Ansprüche 5 oder 6, bei dem der Steuerpuls (14) nach einem, einem Signal für das Ventilhebeartumschalten folgenden Zeitintervall (Dt) gesandt wird.

8. Motor gemäß einem der Ansprüche 5-7, bei dem der Steuerpuls (14) durch eine Dekrementfunktion (F) beendet wird.

## Revendications

1. Procédé de commande du réglage des soupapes dans un moteur à combustion interne comprenant un système de levée de soupape variable (4) grâce auquel le moteur peut fonctionner sélectivement dans l'un quelconque parmi au moins deux modes de levée de soupape, le moteur comprenant en outre un système de réglage de soupape variable (VVT) (8) comprenant un actionneur VVT (8a), **caractérisé en ce qu'**il comprend la délivrance, en relation à un changement de mode de levée de soupape, d'une impulsion de commande (14) à l'actionneur VVT (8a).

2. Procédé selon la revendication 1, dans lequel l'actionneur VVT (8a) est commandable par au moins une soupape de commande (9c) d'un système hydraulique (9), la soupape de commande (9c) étant commandable par une unité de commande du moteur (7), grâce à quoi l'impulsion de commande (14) est envoyée à la soupape de commande.

3. Procédé selon la revendication 1 ou 2 , dans lequel l'impulsion de commande (14) est envoyée après un intervalle de temps (Dt) suivant un signal pour le changement de mode de levée de soupape.

4. Procédé selon l'une quelconque des revendications précédentes, dans lequel l'impulsion de commande (14) est terminée par une fonction de décrémentation (F).

5. Moteur à combustion interne comprenant une unité de commande du moteur (7), un système de levée de soupape variable (4) grâce auquel le moteur peut fonctionner sélectivement dans l'un quelconque parmi au moins deux modes de levée de soupape, et un système de réglage de soupape variable (VVT) (8) comprenant un actionneur VVT (8a), **caractérisé en ce que** l'unité de commande du moteur est adaptée pour délivrer, en relation à un changement de mode de levée de soupape, une impulsion de commande (14) à l'actionneur VVT (8a).

6. Moteur selon la revendication 5, dans lequel l'actionneur VVT (8a) est commandable par au moins une soupape de commande (9c) d'un système hydraulique (9), la soupape de commande (9c) étant commandable par l'unité de commande du moteur (7), grâce à quoi l'unité de commande du moteur (7) est adaptée pour envoyer l'impulsion de commande (14) à la soupape de commande.

7. Moteur selon la revendication 5 ou 6, dans lequel l'impulsion de commande (14) est envoyée après un intervalle de temps (Dt) suivant un signal pour le changement de mode de levée de soupape.

8. Moteur selon l'une quelconque de revendications 5 à 7, dans lequel l'impulsion de commande (14) est terminée par une fonction de décrémentation (F).
